# FASCICULE DE BREVET EUROPEEN

(11) **EP 4 188 701 B1**
(45) Date de publication et mention de la délivrance du brevet: **11.09.2024**
(21) Numéro de dépôt: 21752093.1
(22) Date de dépôt: 22.07.2021
(51) Int. Cl.: B32B 17/10, B60R 11/04, G01S 7/481, B60R 1/00, B60J 1/00, B60J 1/02, B60R 11/00

(54) **VITRAGE DE VEHICULE AVEC INSERT ET DISPOSITIF A CAMERA THERMIQUE ASSOCIE**
FAHRZEUGVERGLASUNGSELEMENT MIT EINSATZ UND ZUGEHÖRIGE VORRICHTUNG MIT WÄRMEBILDGEBUNGSKAMERA
VEHICLE GLAZING ELEMENT WITH INSERT AND ASSOCIATED DEVICE WITH THERMAL IMAGING CAMERA

(30) Priorité: 30.07.2020 FR 2008068
(43) Date de publication de la demande: 07.06.2023
(73) Titulaire: Saint-Gobain Glass France, 92400 Courbevoie (FR)
(72) Inventeur: YAVARI, Keihann, 60280 MARGNY-LES-COMPIEGNE (FR); DAVIS, Claire, 60200 COMPIEGNE (FR)
(74) Mandataire: Saint-Gobain Recherche
(86) Numéro de dépôt international: PCT/FR2021/051369
(87) Numéro de publication internationale: WO 2022/023650

(56) Documents cités:
- WO-A1-2018/154251
- GB-A- 2 271 139
- US-A1- 2007 216 768

## Description

L'invention se rapporte à un vitrage, en particulier un pare-brise, dans un véhicule automobile, du train ou d'un avion en association avec une caméra thermique. L'invention décrit également un dispositif combinant ledit vitrage et ladite caméra thermique pour une telle visualisation d'informations.

Les vitrages pour véhicules et la technologie associée évoluent constamment, notamment pour améliorer la sécurité.

En particulier le brevet GB2271139 propose un pare-brise comportant un vitrage feuilleté avec, dans une partie centrale et proche du bord longitudinale supérieur, une ouverture comblée par un insert en matériau hautement transparent aux infrarouges thermiques, plus précisément en en sulfure de zinc (ZnS) de transmission d'au moins 50% de 5 à 15µm. Une caméra dédiée couplée à un écran visible par le conducteur est dans l'habitacle en face de l'insert. Le trou est circulaire et l'insert est un disque collé aux parois du trou.

En termes de fabrication, le trou est fabriqué avant passage en autoclave du verre de pare-brise.

Un tel pare-brise n'est pas suffisamment fiable, le matériau pouvant s'avérer fragile et difficile à mettre en forme, à une cadence industrielle (durée, taux de rebut). L'invention vise à pallier cet inconvénient.

Plus précisément, la présente invention se rapporte à un vitrage (notamment feuilleté et/ou bombé) de véhicule notamment automobile (voiture, camion, transport en commun : bus, car etc) ou ferroviaire (en particulier à vitesse maximale d'au plus 90km/h ou d'au plus 70km/h, en particulier les métros, tramway) en particulier un pare-brise, ou encore une lunette arrière, un vitrage latéral, (d'épaisseur E1 subcentimétrique notamment d'au plus 5mm pour un pare-brise automobile), vitrage ayant une face principale externe (dite F1) orientée vers l'extérieur (du véhicule) et une face principale (la plus) interne côté habitacle (dite F4 si vitrage feuilleté ou dite F2)
et, vitrage comportant, de préférence dans une zone périphérique (de préférence en bord longitudinal supérieur et/ou dans une région centrale), un trou traversant entre la face interne et la face externe, trou délimité par une paroi latérale du vitrage, notamment trou débouchant formant une encoche périphérique ou trou fermé (entouré par la paroi), en particulier le trou de diamètre équivalent de préférence d'au moins 5mm, et est mieux d'au plus 5cm ou 3cm (avec un diamètre équivalent constant ou un diamètre équivalent plus large en face intérieure qu'en face extérieure), notamment de section droite convexe en particulier circulaire ou ovale ou ellipsoïdale ou encore rectangulaire, carrée ou hexagonale, trou comportant (étant comblé par ) :
- un insert (plan ou bombé, avec une face extérieure affleurant ou en retrait de la face externe F1, voire aussi avec une face intérieure dépassant, affleurant ou en retrait de la face interne F2 ou respectivement F4 si vitrage feuilleté) en un matériau transparent dans une plage A de longueurs d'onde dans le spectre des infrarouges au-delà de 2,5µm (transparent à au moins une longueur d'onde dans cette plage A), insert d'épaisseur E0 donnée de préférence au moins millimétrique, notamment de préférence subcentimétrique,
- et de préférence entre l'insert et la paroi latérale, des moyens de fixation de l'insert (et également de préférence d'étanchéité à l'eau liquide voire gazeuse), notamment sous forme d'un anneau en matière polymère organique (ou hybride organique inorganique) et/ou souple, par exemple polycarbonate ou l'insert est collé à la paroi latérale.

Selon l'invention la plage A va de 9,5µm à 10,5µm, de préférence de 8 à 12µm ou 13µm ou même 14µm ou 15µm ou 20µm.

Selon l'invention, ledit matériau transparent de l'insert comprend (et même de préférence est constitué essentiellement d' un (co)polymère hybride organo-soufré, qui est réticulé, comportant des chaînes linéaires de soufre, réticulées par des comonomères organiques, notamment comonomères organométalliques.

Le matériau transparent de l'insert peut être constitué essentiellement dudit polymère hybride organo-soufré.

On entend par constitué essentiellement que ledit polymère hybride forme au moins 85% en poids dudit matériau de l'insert, de préférence au moins 90% en poids et même 95% ou 99% ou 100% en poids.

Le matériau de l'insert peut comprendre un ou des additifs de préférence d'au plus 15% en poids ou même d'au plus 10% ou 5% ou 1% en poids dudit matériau.

Par exemple on peut ajouter des particules, en particulier des nanoparticules, notamment minérales servant pour un renfort mécanique. Ces (nano) particules peuvent être fonctionnalisées par un groupement organique fonctionnel (amine, thiol, hydroxyle, sulfonyle etc) favorisant l'interaction avec le polymère hybride organo-soufré.

Dans une réalisation, le polymère hybride organo-soufré est obtenu par copolymérisation radicalaire de soufre à l'état fondu et d'un comonomère organique (y compris organométallique) comportant des instaurations éthyléniques C=C. Cette copolymérisation de soufre et de comonomères organiques, qui permet d'avoir un polymère stable, est souvent appelée vulcanisation inverse. Le polymère hybride soufré obtenu par cette réaction de copolymérisation est réticulé, donc thermodurci, insoluble et infusible. Les comonomères organiques représentent de préférence une fraction pondérale minoritaire du réseau macromoléculaire formé, donc dudit polymère réticulé. Tout ou partie des comonomères organiques jouent le rôle d'agent de réticulation reliant les segments polysulfure entre eux.

Le soufre représente avantageusement au moins 50% en poids dudit polymère hybride organo-soufré, de préférence de 50 à 80 % en poids dudit polymère hybride organo-soufré, en particulier de 55 à 79 % en poids dudit polymère hybride organo-soufré, et même de 60 à 78 % en poids dudit polymère hybride organo-soufré. Plus la teneur en soufre du polymère hybride est importante, plus l'indice de réfraction est élevé et meilleures seront ses performances optiques (transparence aux LWIR plus importante). Au-delà d'environ 80 % en poids de soufre, la fraction de comonomères organiques (agent de réticulation) devient trop faible, si bien que les propriétés thermomécaniques sont moins bonnes.

Pour former un réseau tridimensionnel réticulé, le comonomère organique peut comporter au moins deux insaturations polymérisables par voie radicalaire, par exemple des insaturations éthyléniques (doubles liaison C=C) ou des insaturations de type oxirane (époxyde). Un comonomère avec une seule insaturation polymérisable, par exemple une seule double liaison C=C, conduirait à un polymère linéaire, thermoplastique, ayant des performances thermomécaniques insatisfaisantes pour, voire incompatibles avec l'utilisation envisagée dans la présente demande.

Au moins une fraction, de préférence au moins 80% en poids des comonomères organiques, en particulier la totalité des comonomères organiques comporte de préférence trois ou quatre doubles liaisons C=C ou groupes oxirane.

Le matériau de l'insert présente avantageusement une température de transition vitreuse au moins égale à 50°C, de préférence comprise entre 60°C et 180°C (bornes inclues), en particulier entre 80°C et 160°C (bornes inclues).

Le polymère hybride organo-soufré peut contenir avantageusement, en plus du soufre, une plus faible fraction d'un autre élément appartenant au groupe des chalcogènes, de préférence le sélénium (Se). Le polymère hybride organo-soufré contient par exemple de 0,5 à 5 % en poids d'un autre élément appartenant au groupe des chalcogènes qui est de préférence du sélénium (Se). La fraction de sélénium du polymère hybride organo-soufré est avantageusement de 0,5 à 10% en poids, de préférence de 1,0 à 5% en poids.

Dans une réalisation préférée, au moins une fraction des comonomères organiques, de préférence la majorité, en particulier au moins 80% ou 90 % en poids des comonomères est choisi dans le groupe constitué de :
- 1,3-diisopropénylbenzène (DIB),
- 1,3,5-triisopropénylbenzène (TIB),
- di-iodobenzène, norbornadiène (NBD),
- norbornadiène dimère (NBD2), et
- tétravinylétain (TVSn).

Des polymères hybrides organo-soufrés selon l'invention sont décrits par exemple dans l'article de revue de Kleine et al. intitulé « 100th Anniversary of Macromolecular Science Viewpoint : High Refractive Index Polymers from Elemental Sulfur for infrared Thermal Imaging and Optics », ACS MacroLetters, 2020, 9, 245-259.

La fabrication du polymère par vulcanisation inverse de soufre et 1,3-diisopropénylbenzène (DIB) est décrite en page 249 en relation avec la figure 5. La polymérisation de soufre et de tétravinylétain (TVSn) est décrite en page 252 en relation avec la figure 10. La synthèse d'un (co)polymère hybride de soufre et de norbornadiène dimère (NBD2) est divulguée à la page 253 et 254 en relation avec la figure 12.

Des polymères hybrides soufrés selon l'invention sont également décrits dans l'article de revue de Kleine et al. intitulé « infrared Fingerprint Engineering : A Molecular-Design approach to Long Wave infrared transparency with polymeric materials», Angew. Chem. (2019), 131, pages 1-6. La fabrication d'un copolymère hybride organo-soufré à base de NBD2 par vulcanisation inverse est décrite à la page 3 en relation avec la figure 3.

Il existe d'autres méthodes de fabrication du polymère hybride organo-soufré qui peut être notamment un terpolymère ou encore un (co)polymère hybride organo-soufré fonctionnalisé. Le polymère hybride organo-soufré, notamment obtenu à partir d'un prépolymère hybrique organo-soufré, peut donc être un terpolymère ou un polymère hybride organo-soufré fonctionnalisé.

La demande WO2018/026493 décrit une première méthode de fabrication du polymère hybride organo-soufré (terpolymère) basée sur une réaction en deux étapes :
- première étape : formation d'un prépolymère soufré par réaction de soufre élémentaire (liquide, fondu) avec un premier comonomère vinylique (styrène, etc) ou avec un autre comonomère insaturé, miscible avec le soufre élémentaire, permettant une vulcanisation inverse
- deuxième étape : réaction du prépolymère soufré (liquide, fondu) avec au moins un deuxième comonomère miscible avec le prépolymère,

Le deuxième comonomère peut être polyfonctionnel, ce qui favorise sa solubilisation dans le prépolymère, et apporter une pluralité de groupes fonctionnels réagissant avec le prépolymère.

Différentes formes de soufre élémentaire sont décrites à la page 3, paragraphe 15. Une liste de premiers comonomères styréniques est donnée à la page 4 paragraphe 17. Un exemple de deuxième comonomère est donné page 2 paragraphe 9, en particulier alcynes ou comonomères insaturés/vinyliques (de préférence norbornènes, isobutylènes ou encore styréniques, allyliques, méthacrylates, acrylates, ,acrylonitrile, vinylpyridines, maléimide.

Un exemple de fabrication d'un terpolymère est décrit en relation avec les figures 2, 3 et 4.

La demande WO2018/026493 décrit également une méthode de fabrication d'un polymère hybride organo-soufré fonctionnalisé comportant :
- première étape : la fabrication d'un premier prépolymère soufré à partir de soufre élémentaire liquide, notamment un oligomère soufré styrénique, miscible avec le soufre élémentaire, permettant une vulcanisation inverse
- deuxième étape : une activation thermique ouvrant une liaison S-S de manière à intégrer au moins un autre comonomère insaturé (notamment allylique, acrylate, styrénique).

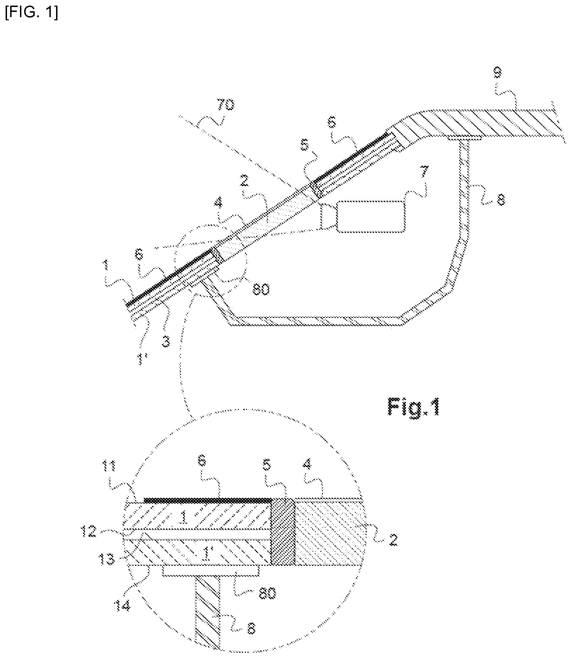

Un exemple de soufre élémentaire est donné page 3 paragraphe 15. Un exemple de polymère obtenu est décrit en figure 1.

Une méthode de fabrication du polymère hybride organo-soufré (terpolymère) est décrite dans la demande WO2015/123552 ou encore dans la demande US20180208686. Cette méthode utilise également une réaction en deux étapes :
- première étape : formation d'un prépolymère soufré par réaction de soufre élémentaire avec un premier comonomère vinylique (styrène, etc) ou autre comonomère insaturé, prépolymère soufré qui comporte en outre un autre groupement fonctionnel qui est de préférence un groupe nucléophile, en particulier choisi parmi amine (-NH2), thiol, hydroxyle, nitro, en particulier cité en paragraphe 19
- deuxième étape : réaction dudit autre groupement fonctionnel avec au moins un deuxième comonomère, notamment réaction par addition/substitution d'un nucléophile. Par exemple un deuxième comonomère est un époxyde la réaction avec le deuxième comonomère provoque une ouverture de l'époxyde.

Des exemples illustratifs sont décrits en relation avec les figures 7, 8, 14.

En outre, la figure 16 montre en alternative de la voie radicalaire d'obtention du prépolymère sulfuré (ici fonctionalisé amine) une voie par substitution aromatique électrophile.

La transmission optique infrarouge est mesurée pour la plage A par un spectromètre à transformée de Fourier tel que le BrukerVertex-70.

De préférence l'insert présente une transmission optique infrarouge (infrared optical transmission en anglais) d'au moins 35%, ou mieux au moins 40%, 50% et mieux d'au moins 60% dans cette plage A, notamment une variation de transmission optique infrarouge d'au plus 5% ou 3% ou 2% (spectre plat) dans la plage A.

De préférence, le diamètre équivalent du trou (constant ou variable dans l'épaisseur) et le diamètre équivalent de l'insert - (constant ou variable dans l'épaisseur) sont chacun d'au plus 5cm et même d'au plus 3cm, notamment de forme géométrique, de préférence avec une section droite convexe notamment circulaire ou ovale ou ellipsoïdale ou encore rectangulaire, carrée ou hexagonale.

Une taille de trou (et d'insert) trop élevée peut dégrader la résistance mécanique d'un vitrage (pare-brise etc) avec les conséquences pour la sécurité de passagers.

Par ailleurs le diamètre de l'insert est de préférence d'au moins 5mm.

Pour plus de transparence dans la plage A, l'épaisseur E0 de l'insert peut être inférieure ou égale à 10mm (et même subcentimétrique) et au moins millimétrique notamment dans une gamme allant de 3mm à 5mm.

L'insert peut être bombé. Le matériau de l'insert peut être poli (face extérieure et intérieure).

Avantageusement pour améliorer sa robustesse, l'insert comprenant une face extérieure et une face intérieure, il comporte sur la face extérieure et éventuellement sur la face intérieure au moins une couche fonctionnelle, notamment une couche de protection mécanique et/ou chimique.

La couche de protection mécanique et/ou chimique peut être un revêtement monocouche ou multicouche. La couche de protection mécanique et/ou chimique peut être directement sur la face extérieure et notamment être la seule couche fonctionnelle ou sous une couche antireflet dans la plage A.

Avantageusement pour améliorer la transmission infrarouge, l'insert comprenant une face extérieure et une face intérieure, il comporte sur la face extérieure et/ou sur la face intérieure une couche antireflet dans la plage A. La couche antireflet peut être un revêtement monocouche ou multicouche. La couche antireflet peut être directement sur la face intérieure et notamment être la seule couche fonctionnelle.

En particulier l'insert comporte la couche de protection mécanique et/ou chimique (directement) sur la face extérieure et la couche antireflet sur la face intérieure.

Le vitrage de véhicule (pare-brise ou autre vitrage de véhicule notamment automobile) peut être monolithique c'est-à-dire comportant une seule feuille de verre notamment minéral ou organique.

Le vitrage du véhicule peut comprendre une feuille de verre organique. Préférentiellement, le verre organique est formé par un composé comprenant des acrylates, préférentiellement par du polyméthacrylate de méthyle (d'acronyme PMMA). Il peut également être formé en polycarbonate.

Le vitrage de véhicule peut être un pare-brise de véhicule mais aussi un vitrage latéral de véhicule, une lucarne, une lunette arrière de véhicule, par exemple une lunette arrière chauffante.

Le vitrage selon l'invention peut être un vitrage feuilleté, notamment un pare-brise de véhicule (routier, automobile en particulier), en particulier bombé, comprenant une première feuille de verre (minéral) avec ladite face principale interne appelée F1 et une face principale opposée (appelée F2) et une deuxième feuille de verre (minéral voire organique) avec ladite face principale externe appelée F4 côté intérieur de l'habitacle (et la face principale opposée F3), les première et deuxième feuilles de verre étant liées par un intercalaire de feuilletage, notamment acoustique et/ou teinté, en une matière polymère notamment thermoplastique.

En particulier le vitrage feuilleté comporte :
- un première feuille de verre (minérale), éventuellement claire, extraclaire ou teintée notamment grise ou verte, de préférence bombée, formant vitrage extérieur, avec des première et deuxième faces principales respectivement dites face F1 et face F2, si véhicule automobile d'épaisseur de préférence d'au plus 2,5mm, même d'au plus 2mm - notamment 1,9mm, 1,8mm, 1,6mm et 1,4mm- ou même d'au plus 1,3mm ou d'au plus 1mm
- un intercalaire de feuilletage, éventuellement clair, extraclair ou teinté notamment gris ou vert, en matière polymérique de préférence thermoplastique et mieux encore en polyvinylbutyral (PVB), de préférence si véhicule automobile d'épaisseur d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et en retrait du chant d'un deuxième vitrage d'au plus 2mm, l'intercalaire de feuilletage ayant éventuellement une section transversale diminuant en forme en coin du haut vers le bas du vitrage feuilleté (en particulier un parebrise),
- un deuxième vitrage, en verre minéral, de préférence bombé et de préférence clair ou extraclair voire teinté, formant vitrage intérieur, avec des troisième et quatrième faces principales, si véhicule automobile d'épaisseur de préférence inférieure à celle du premier vitrage, même d'au plus 2mm - notamment 1,9mm, 1,8mm, 1,6mm et 1,4mm- ou même d'au plus 1,3mm ou d'au plus 1mm, l'épaisseur des premier et deuxième vitrages étant de préférence strictement inférieure à 4mm, même à 3,7mm.

Le verre intérieur et/ou extérieur peut être neutre (sans coloration), ou (légèrement) teinté notamment gris ou vert, telle verre TSA de la société Saint-Gobain Glass. Le verre intérieur et/ou extérieur peut avoir subi un traitement chimique ou thermique du type durcissement, recuit ou une trempe (pour une meilleure résistance mécanique notamment) ou être semi trempé.

Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment une ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). Egalement l'un des feuillets de l'intercalaire peut être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm.

L'intercalaire de feuilletage peut comprendre un autre film plastique fonctionnel (transparent, clair ou teinté) par exemple un film en poly(éthylène téréphtalate) PET porteur d'une couche athermique, électroconductrice etc par exemple on a PVB/ film fonctionnel/PVB entre les faces F2 et F3.

Le film plastique transparent peut être d'une épaisseur comprise entre 10 et 100 µm. Le film plastique transparent peut être plus largement en polyamide, polyester, polyolefine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M^{®}, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

Afin de limiter l'échauffement dans l'habitacle ou de limiter l'usage d'air conditionné, l'une des feuilles de verre au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

Naturellement l'application la plus recherchée est que le vitrage soit un pare-brise d'un véhicule routier (automobile) ou même ferroviaire (à vitesse modérée).

Le vitrage selon l'invention peut comporter au moins une première feuille de verre comportant sur une face principale une couche opaque (de masquage) notamment un émail (noir etc) en bordure du trou traversant (de façon à masquer la ou les caméras par exemple).

Le vitrage feuilleté selon l'invention peut comporter une première feuille de verre comportant sur une face principale (par exemple la face F2) une couche opaque (de masquage ) notamment un émail (noir etc) en bordure du trou traversant (de façon à masquer la ou les caméras par exemple) et/ou une deuxième feuille de verre comportant sur une face principale (par exemple la face F3 ou F4) une couche opaque (de masquage ) notamment un émail (noir etc) en bordure du trou traversant (de façon à masquer la ou les caméras par exemple).

On peut aussi prévoir une couche de masquage sur au moins l'une des faces principales de l'intercalaire de feuilletage notamment PVB.

L'invention se rapporte également à un dispositif qui comprend :
- le vitrage tel que décrit précédemment
- une caméra dite thermique (sensible dans la plage A), disposée dans l'habitacle derrière ledit vitrage de façon à recevoir un rayonnement provenant de l'extérieur de l'habitacle et ayant traversé l'insert, caméra thermique comprenant un objectif et un système de détection infrarouge dans la plage A, par exemple par microbolométrie, notamment sans refroidissement cryogénique,

On préfère une détection infrarouge avec une sensibilité maximum dans la plage A et même une sensibilité faible au-delà de 20µm ou 15µm ou 14µm et en deçà de 7 ou 6µm. Comme exemple de caméra thermique on peut citer le produit Atom^{®}1024 de la société Lynred USA.

Certains modes de réalisations avantageux mais non limitatif de la présente invention sont décrits ci-après, qui peuvent bien entendu combinés entres eux le cas échéant.

La figure 1 schématise un pare-brise 100 selon l'invention, en coupe avec une caméra thermique 7 placée derrière le pare-brise face à une zone qui se situe de préférence dans la partie centrale et supérieure du pare-brise. Dans cette zone, la caméra est orientée avec un certain angle vis-à-vis de la surface du pare-brise (face F4). En particulier, l'objectif et les capteurs infrarouge sont orientés directement vers la zone de saisie d'images, selon une direction proche de la parallèle au sol, c'est-à-dire seulement légèrement inclinée vers la route. Autrement dit, la caméra 7 est orientée vers la route selon un angle faible avec un champ 70 adapté pour remplir ses fonctions.

Le pare-brise est un vitrage feuilleté classique notamment bombé comprenant :
- une feuille de verre externe 1 de préférence teintée, par exemple en verre TSA et de 2,1 mm d'épaisseur, avec face extérieure 11 F1 et face intérieure F2 12
- et une feuille de verre interne 1', par exemple en verre TSA (ou clair ou extraclair) et de 2,1mm d'épaisseur ou même de 1,6mm ou même moins, avec face extérieure F3 13et face intérieure F4 14 côté habitacle
- les deux feuilles de verre 1, 1' étant liées l'une à l'autre par un intercalaire en matière thermoplastique 3, le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en trois feuillets PVB.

De façon classique et bien connue, le pare-brise est obtenu par feuilletage à chaud des éléments 1, 1' et 3.

Le pare-brise 100 comporte sur la face extérieure 11 par exemple (ou de préférence en F2 et/ou en face F3 ou F4 ou encore imprimé sur la couche 3) de préférence un revêtement opaque par exemple noir 6, tel qu'une couche d'émail ou de laque noire, sur toute la surface du vitrage disposée en regard du dispositif incorporant la caméra thermique (sur tout le pourtour du trou donc), y compris son boîtier 8 (plastique, métal etc), de manière à cacher celui-ci. Le boitier 8 peut être collé à la face F4 par une colle 80 et au toit 9.

La couche opaque 6 peut s'étendre au-delà de la zone avec l'insert. Eventuellement l'extension (latérale) de la couche opaque formant une bande en bordure supérieure du trou traversant pour que le pare-brise ait une bande opaque (noire) le long du bord longitudinal supérieur voire même un cadre opaque (noir) sur toute la périphérie.

Selon l'invention, dans la zone périphérique en vis-à-vis de la caméra, le pare-brise comporte un trou traversant entre la face interne 14 et la face externe 11, trou délimité par une paroi latérale 10 du vitrage feuilleté (verre 1/PVB 3/verre 1'), ledit trou traversant comportant :
- un insert 2 en matériau polymère, transparent dans une plage A de longueurs d'onde dans les infrarouges qui va au moins de 9,5 à 10,5µm et de préférence de 8 à 12µm voire 15µm ou 20µm, l'insert étant d'épaisseur E0 donnée de préférence inférieure ou égale à 10mm, par exemple de 3 à 5mm,
- entre l'insert 2 et la paroi latérale 10, des moyens de fixation de l'insert notamment sous forme d'un anneau 5 en matière souple, polymère, les moyens de fixations étant notamment collés à la paroi latérale 10.

Le matériau de l'insert 2 présente une transmission infrarouge d'au moins 30% et mieux d'au moins 40% dans ladite plage A

Le diamètre équivalent du trou est d'au plus 5cm et même d'au plus 3cm, le diamètre équivalent de l'insert est d'au plus 5cm et même d'au plus 3cm.

Le matériau de l'insert 2 est un polymère hybride organo-soufré (avec ou sans additifs) par exemple est obtenu par vulcanisation inverse.

L'insert 2 comporte une face extérieure et une face intérieure et il comporte ici sur la face extérieure (et éventuellement sur la face intérieure) de préférence une couche de protection mécanique et/ou chimique 4 ou encore une couche antireflet. La face intérieure peut comporter une couche antireflet.

Le trou traversant peut également être une encoche, donc un trou traversant débouchant de préférence côté toit.

Le trou traversant (et l'insert) peut être dans une autre région du pare-brise ou même dans un autre vitrage du véhicule notamment automobile.

## Revendications

1. Vitrage de véhicule (100), notamment automobile ou ferroviaire, en particulier pare-brise, lunette arrière, vitrage latéral, vitrage ayant une face principale externe (11) orientée vers l'extérieur et une face principale interne (14) côté habitacle, vitrage comportant un trou traversant entre la face interne et la face externe, trou délimité par une paroi latérale (10') du vitrage, ledit trou traversant comportant un insert (2) en matériau transparent dans une plage A de longueurs d'onde dans le spectre infrarouge au-delà de 2,5µm,
**caractérisé en ce que** la plage A va au moins de 9,5µm à 10,5µm et de préférence de 8 à 12µm et **en ce que** ledit matériau transparent de l'insert comprend un polymère hybride organo-soufré, qui est réticulé, comportant des chaînes linéaires de soufre réticulées par des comonomères organiques.

2. Vitrage de véhicule (100) selon la revendication précédente **caractérisé en ce que** le soufre représente au moins 50% en poids, de préférence de 50 à 80 % en poids du polymère hybride organo-soufré.

3. Vitrage de véhicule (100) selon l'une des revendications précédentes **caractérisé en ce qu'**au moins une fraction des comonomères organiques comportent au moins deux doubles liaisons C=C, de préférence trois ou quatre doubles liaisons C=C.

4. Vitrage de véhicule (100) selon l'une des revendications précédentes **caractérisé en ce qu'**au moins une fraction des comonomères organiques sont choisis dans le groupe constitué de 1,3-diisopropénylbenzène (DIB), 1,3,5-triisopropénylbenzène (TIB), di-iodobenzène, norbornadiène (NBD), norbornadiène dimère (NBD2), et tétravinylétain (TVSn).

5. Vitrage de véhicule (100) selon l'une des revendications précédentes **caractérisé en ce que** le polymère hybride organo-soufré contient de 0,5 à 5 % en poids d'un autre élément appartenant au groupe des chalcogènes qui est de préférence du sélénium (Se).

6. Vitrage de véhicule (100) selon l'une des revendications précédentes **caractérisé en ce que** le matériau de l'insert présente une température de transition vitreuse au moins égale à 50 °C, de préférence dans une gamme allant de 60°C à 180°C, en particulier dans une gamme allant de 80°C à 160°C.

7. Vitrage de véhicule (100) selon l'une des revendications précédentes **caractérisé en ce que** le polymère hybride organo-soufré est obtenu par vulcanisation inverse.

8. Vitrage de véhicule (100) selon l'une des revendications précédentes **caractérisé en ce que** le polymère hybride organo-soufré, notamment obtenu à partir d'un prépolymère hybrique organo-soufré, est un terpolymère ou un polymère hybride organo-soufré fonctionnalisé.

9. Vitrage de véhicule (100) selon l'une des revendications précédentes **caractérisé en ce que** le matériau transparent de l'insert présente une transmission optique infrarouge d'au moins 35%, de préférence au moins 40%, ou même au moins 50% dans ladite plage A.

10. Vitrage de véhicule (100) selon l'une des revendications précédentes **caractérisé en ce que** l'insert étant d'épaisseur E0 donnée subcentimétrique et au moins millimétrique notamment l'épaisseur est dans une gamme allant de 3mm à 5mm.

11. Vitrage de véhicule (100) selon l'une des revendications précédentes **caractérisé en ce que** l'insert (2) comporte une face extérieure et une face intérieure et comporte sur la face extérieure et/ou sur la face intérieure, au moins une couche fonctionnelle, notamment une couche de protection mécanique et/ou chimique (4) ou une couche antireflet dans la plage A.

12. Vitrage de véhicule (100) selon l'une des revendications précédentes **caractérisé en ce qu'**il comprend, entre l'insert et la paroi latérale, des moyens de fixation (5) de l'insert (2), notamment sous forme d'un anneau en matière souple et/ou polymère, les moyens de fixation étant notamment collés à la paroi latérale (10), ou **en ce que** l'insert est collé à la paroi latérale.

13. Vitrage de véhicule (100) selon l'une des revendications précédentes **caractérisé en ce qu'**il forme un vitrage feuilleté, notamment un pare-brise, en particulier bombé, le vitrage feuilleté comprenant une première feuille de verre (1) avec ladite face interne appelée F1 et une face opposée et une deuxième feuille de verre (1') avec ladite face externe appelée F4 côté intérieur de l'habitacle, les première et deuxième feuilles de verre étant liées par un intercalaire de feuilletage (3), notamment acoustique et/ou teinté en une matière polymère notamment thermoplastique.

14. Vitrage de véhicule (100) selon l'une des revendications précédentes **caractérisé en ce qu'**il comporte au moins une première feuille de verre comportant sur une face principale, notamment face F2 d'un vitrage feuilleté, une couche opaque, notamment un émail (6), en bordure du trou traversant.

15. Dispositif **caractérisé en ce qu'**il comprend :
- ledit vitrage (100) selon l'une des revendications précédentes
- une caméra dite thermique (7), disposée dans l'habitacle derrière ledit vitrage de façon à être apte à recevoir un rayonnement provenant de l'extérieur de l'habitacle et ayant traversé l'insert, caméra thermique comprenant un objectif et un système de détection infrarouge dans la plage A.

## Patentansprüche

1. Kraftfahrzeugverglasung (100), insbesondere für ein Automobil oder eine Eisenbahn, im Besonderen eine Windschutzscheibe, eine Heckscheibe, eine Seitenverglasung, wobei die Verglasung eine nach außen gerichtete äußere Hauptfläche (11) und eine fahrgastraumseitige innere Hauptfläche (14) besitzt, wobei die Verglasung ein Durchgangsloch zwischen der Innenfläche und der Außenfläche aufweist, wobei das Loch durch eine Seitenwand (10') der Verglasung begrenzt ist, wobei das Durchgangsloch einen Einsatz (2) aus einem Material aufweist, das in einem Wellenlängenbereich A in dem Infrarotspektrum über 2,5 µm transparent ist,
**dadurch gekennzeichnet, dass** der Bereich A mindestens 9,5 µm bis 10,5 µm und vorzugsweise 8 bis 12 µm beträgt und dass das transparente Material des Einsatzes ein Organoschwefelhybridpolymer umfasst, das vernetzt ist, das lineare Schwefelketten aufweist, die durch organische Comonomere vernetzt sind.

2. Kraftfahrzeugverglasung (100) nach dem vorstehenden Anspruch, **dadurch gekennzeichnet, dass** der Schwefel mindestens 50 Gew.-%, vorzugsweise 50 bis 80 Gew.-% des Organoschwefelhybridpolymers ausmacht.

3. Kraftfahrzeugverglasung (100) nach einem der vorstehenden Ansprüche, **dadurch gekennzeichnet, dass** mindestens ein Anteil der organischen Comonomere mindestens zwei C=C-Doppelbindungen, vorzugsweise drei oder vier C=C-Doppelbindungen, aufweist.

4. Kraftfahrzeugverglasung (100) nach einem der vorstehenden Ansprüche, **dadurch gekennzeichnet, dass** mindestens ein Anteil der organischen Comonomere aus der Gruppe ausgewählt ist, bestehend aus 1,3-Diisopropenylbenzol (DIB), 1,3,5-Triisopropenylbenzol (TIB), Diiodbenzol, Norbornadien (NBD), Norbornadien-Dimer (NBD2) und Tetravinylzinn (TVSn).

5. Kraftfahrzeugverglasung (100) nach einem der vorstehenden Ansprüche, **dadurch gekennzeichnet, dass** das Organoschwefelhybridpolymer zu 0,5 bis 5 Gew.-% ein weiteres Element enthält, das zu der Gruppe der Chalkogene gehört, das vorzugsweise Selen (Se) ist.

6. Kraftfahrzeugverglasung (100) nach einem der vorstehenden Ansprüche, **dadurch gekennzeichnet, dass** das Material des Einsatzes eine Glasübergangstemperatur von mindestens gleich 50 °C, vorzugsweise in einer Bandbreite von 60 °C bis 180 °C, im Besonderen in einer Bandbreite von 80 °C bis 160 °C vorweist.

7. Kraftfahrzeugverglasung (100) nach einem der vorstehenden Ansprüche, **dadurch gekennzeichnet, dass** das Organoschwefelhybridpolymer durch inverse Vulkanisation erhalten wird.

8. Kraftfahrzeugverglasung (100) nach einem der vorstehenden Ansprüche, **dadurch gekennzeichnet, dass** das Organoschwefelhybridpolymer, das im Besonderen aus einem Organoschwefelhybridpräpolymer erhalten wird, ein Terpolymer oder ein funktionalisiertes Organoschwefelhybridpolymer ist.

9. Kraftfahrzeugverglasung (100) nach einem der vorstehenden Ansprüche, **dadurch gekennzeichnet, dass** das transparente Material des Einsatzes in dem Bereich A eine optische Infrarottransmission von mindestens 35 %, vorzugsweise mindestens 40 %, oder sogar mindestens 50 % vorweist.

10. Kraftfahrzeugverglasung (100) nach einem der vorstehenden Ansprüche, **dadurch gekennzeichnet, dass** der Einsatz eine gegebene Dicke E0 im Subzentimeter- und mindestens Millimeterbereich aufweist, insbesondere die Dicke in einer Bandbreite von 3 mm bis 5 mm liegt.

11. Kraftfahrzeugverglasung (100) nach einem der vorstehenden Ansprüche, **dadurch gekennzeichnet, dass** der Einsatz (2) eine Außenfläche und eine Innenfläche aufweist und auf der Außenfläche und/oder auf der Innenfläche mindestens eine funktionelle Schicht aufweist, insbesondere eine mechanische und/oder chemische Schutzschicht (4) oder eine Antireflexionsschicht in dem Bereich A.

12. Kraftfahrzeugverglasung (100) nach einem der vorstehenden Ansprüche, **dadurch gekennzeichnet, dass** sie zwischen dem Einsatz und der Seitenwand Mittel (5) zum Fixieren des Einsatzes (2), insbesondere in Form eines Ringes aus flexiblem und und/oder Polymermaterial aufweist, wobei die Fixiermittel insbesondere mit der Seitenwand (10) verklebt sind, oder dass der Einsatz mit der Seitenwand verklebt ist.

13. Kraftfahrzeugverglasung (100) nach einem der vorstehenden Ansprüche, **dadurch gekennzeichnet, dass** sie eine Verbundverglasung, insbesondere eine Windschutzscheibe, im Besonderen gewölbt, ausbildet, die Verbundverglasung umfassend eine erste Glasscheibe (1) mit der F1 genannten Innenfläche und einer gegenüberliegenden Fläche und eine zweite Glasscheibe (1') mit der F4 genannten Außenfläche auf der Innenseite des Fahrgastraums, wobei die erste und die zweite Glasscheibe durch eine Verbundzwischenlage (3), insbesondere akustisch und/oder getönt, aus einem Polymermaterial, insbesondere Thermoplast, verbunden sind.

14. Kraftfahrzeugverglasung (100) nach einem der vorstehenden Ansprüche, **dadurch gekennzeichnet, dass** sie mindestens eine erste Glasscheibe aufweist, die auf einer Hauptfläche, insbesondere Fläche F2 einer Verbundverglasung, eine undurchsichtige Schicht, insbesondere eine Emaille (6), an einem Rand des Durchgangslochs aufweist.

15. Vorrichtung, **dadurch gekennzeichnet, dass** sie umfasst:
- die Verglasung (100) nach einem der vorstehenden Ansprüche
- eine Wärmekamera (7), die in dem Fahrgastraum hinter der Verglasung angeordnet ist, um geeignet zu sein, um eine Strahlung aufzunehmen, die von außerhalb des Fahrgastraums kommt und den Einsatz passiert hat, die Wärmekamera umfassend eine Linse und ein Infrarotdetektionssystem im Bereich A.

## Claims

1. A vehicle glazing (100), particularly for a motor or rail vehicle, in particular a windscreen, a rear window, a side glazing, glazing having a main external face (11) oriented toward the outside and a main internal face (14) on the passenger compartment side, glazing comprising a through-hole between the internal face and the external face, which hole is delimited by a side wall (10') of the glazing, said through-hole comprising an insert (2) made of material that is transparent in a range A of wavelengths in the infrared spectrum beyond 2.5 µm,
**characterized in that** the range A ranges at least from 9.5 µm to 10.5 µm, and preferably from 8 to 12 µm, and **in that** said transparent material of the insert comprises a hybrid organo-sulfur polymer, which is cross-linked, comprising linear sulfur chains cross-linked by organic comonomers.

2. The vehicle glazing (100) according to the preceding claim, **characterized in that** the sulfur represents at least 50% by weight, preferably from 50 to 80% by weight, of the hybrid organo-sulfur polymer.

3. The vehicle glazing (100) according to one of the preceding claims, **characterized in that** at least a fraction of the organic comonomers comprise at least two C=C double bonds, preferably three or four C=C double bonds.

4. The vehicle glazing (100) according to one of the preceding claims, **characterized in that** at least a fraction of the organic comonomers are selected from the group consisting of 1,3-diisopropenylbenzene (DIB), 1,3,5-triisopropenylbenzene (TIB), diiodobenzene, norbornadiene (NBD), norbornadiene dimer (NBD2), and tetravinyl tin (TVSn).

5. The vehicle glazing (100) according to one of the preceding claims, **characterized in that** the hybrid organo-sulfur polymer contains from 0.5 to 5% by weight of another element belonging to the group of chalcogens, which preferably is selenium (Se).

6. The vehicle glazing (100) according to one of the preceding claims, **characterized in that** the material of the insert has a glass transition temperature at least equal to 50°C, preferably in a range ranging from 60°C to 180°C, in particular in a range ranging from 80°C to 160°C.

7. The vehicle glazing (100) according to one of the preceding claims, **characterized in that** the hybrid organo-sulfur polymer is obtained by inverse vulcanization.

8. The vehicle glazing (100) according to one of the preceding claims, **characterized in that** the hybrid organo-sulfur polymer, in particular obtained from a hybrid organo-sulfur prepolymer, is a terpolymer or a functionalized hybrid organo-sulfur polymer.

9. The vehicle glazing (100) according to one of the preceding claims, **characterized in that** the transparent material of the insert has infrared optical transmission of at least 35%, preferably at least 40%, or even at least 50% in said range A.

10. The vehicle glazing (100) according to one of the preceding claims, **characterized in that** the insert having a given subcentimetric and at least millimetric thickness E0, in particular the thickness is in a range ranging from 3 mm to 5 mm.

11. The vehicle glazing (100) according to one of the preceding claims, **characterized in that** the insert (2) comprises an exterior face and an interior face and comprises on the exterior face and/or on the interior face, at least one functional layer, in particular a mechanical and/or chemical protection layer (4) or an anti-reflection layer in the range A.

12. The vehicle glazing (100) according to one of the preceding claims, **characterized in that** it comprises, between the insert and the side wall, attachment means (5) for the insert (2), particularly in the form of a ring made of flexible material and/or polymer, the attachment means particularly being bonded to the side wall (10), or **in that** the insert is bonded to the side wall.

13. The vehicle glazing (100) according to one of the preceding claims, **characterized in that** it forms a laminated glazing, in particular a windscreen, particularly curved, the laminated glazing comprising a first glass sheet (1) with said internal face, called F1, and an opposite face and a second glass sheet (1') with said external face called F4 on the inside of the passenger compartment, the first and second glass sheets being bonded by a lamination interlayer (3), particularly acoustic and/or tinted and made of a polymer material, particularly thermoplastic.

14. The vehicle glazing (100) according to one of the preceding claims, **characterized in that** it comprises at least one first glass sheet comprising, on a main face, particularly face F2 of a laminated glazing, an opaque layer, particularly an enamel (6), at the edge of the through-hole.

15. A device, **characterized in that** it comprises:
- said glazing (100) according to one of the preceding claims
- a camera called thermal camera (7), arranged in the passenger compartment behind said glazing in order to be able to receive radiation originating from outside the passenger compartment and that has passed through the insert, thermal camera comprising an objective lens and a system for detecting infrared in the range A.
